(19) Europäisches Patentamt
European Patent Office
Office européen des brevets

(11) **EP 2 131 100 A1**

(12) **EUROPEAN PATENT APPLICATION**
published in accordance with Art. 153(4) EPC

(43) Date of publication:
**09.12.2009 Bulletin 2009/50**

(51) Int Cl.:
*F21V 8/00* (2006.01)    *F21S 2/00* (2006.01)
*H05B 37/02* (2006.01)    *F21Y 101/02* (2006.01)

(21) Application number: **08722927.4**

(22) Date of filing: **28.03.2008**

(86) International application number:
**PCT/JP2008/056068**

(87) International publication number:
**WO 2008/123413 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 JP 2007088302**
**03.04.2007 JP 2007097308**

(71) Applicant: **Harison Toshiba Lighting Corporation Imabari-shi, Ehime 794-8510 (JP)**

(72) Inventors:
• **IKEBE, Shota**
**Imabari-shi**
**Ehime 794-8510 (JP)**

• **SHIBA, Toshiaki**
**Imabari-shi**
**Ehime 794-8510 (JP)**
• **TSUCHIYA, Ryuji**
**Imabari-shi**
**Ehime 794-8510 (JP)**
• **KAWASAKI, Yoji**
**Imabari-shi**
**Ehime 794-8510 (JP)**

(74) Representative: **Kramer - Barske - Schmidtchen European Patent Attorneys**
**Landsberger Straße 300**
**D-80687 München (DE)**

(54) **HOLLOW PLANAR ILLUMINATING APPARATUS**

(57)    A light reflection surface member (2) is arranged on the bottom surface of a hollow unit case (1), a light emitting surface member (3) is arranged on the upper surface side of the unit case to face the light reflection surface member, and a hollow light guide region (10) is formed by being sandwiched by the light reflection surface member and the light emitting member. On the side surface of the unit case, an LED light source (5) is arranged. The LED light source has many LEDs (7R, 7B, 7G) in rows, and each LED emits single color light of red or green or blue. On two strips of light reflection surface member in the unit case (1), a color sensor is arranged for measuring illuminance of each color light entered the hollow light guide region from the LED light source (5). The LED control circuit is supplied with the measurement data obtained from the color sensor, and the LED control circuit controls light emission intensities of the LEDs (7R, 7B, 7G) included in the LED light source, based on the illuminance of light of each color.

Fig.1

EP 2 131 100 A1

**Description**

BACKGROUND OF THE INVENTION

Field of the Invention

The present invention relates to a hollow planar illuminating apparatus that emits illuminating light having uniform brightness distribution from a light-emitting surface, such as a backlight unit of a liquid crystal display device.

Description of the Related Art

In recent years, for a light source of a backlight unit for a liquid crystal display device, a cold cathode discharge lamp has been increasingly replaced with LEDs. This is mainly because an LED does not include mercury that is a harmful material and more suitable as an environmentally-friendly light source and allows power consumption to be significantly reduced by recent drastic enhancement in light-emitting efficiency as compared to a cold cathode discharge lamp. A backlight unit having an LED as a light source has been mainly applied to mostly small-sized apparatuses such as a cellular phone or mobile terminal until now, but has also been increasingly used for large-sized liquid crystal display devices such as a 20-inch or larger liquid crystal monitor or a liquid crystal TV in recent years.

In a large-sized liquid crystal display device, a backlight unit thereof is required to have high brightness. Accordingly, a side light system which is generally used in a small-sized backlight unit is not employed as a backlight for a large-sized liquid crystal display device. The side light system is a system for emitting light with a light source disposed at a side portion of a light guide plate, guiding the light from the light source to the light guide plate from a side face thereof for light diffusion and reflection and emitting the light from a surface light-emitting portion which is a surface of the light guide plate. Such a side light system is disclosed, for example, in Japanese Patent Application Laid-Open Nos. 8-171806 and 2006-106212. As such a backlight unit for a large-sized liquid crystal display device, a direct type backlight unit, in which an LED light source is disposed over the whole surface of a surface light-emitting portion, is commonly used. For example, Japanese Patent Application Laid-Open No. 2005-316337 discloses such a direct type backlight unit.

However, in such a direct type backlight unit, with a light source of LEDs, a too short distance between one another among a number of LEDs arranged and a surface light-emitting portion (diffusion board) causes unevenness in brightness or coloring, thus degrading the display quality of a liquid crystal screen using such a backlight unit. This phenomenon further remarkably appears when high-power LEDs each of 1W class or higher are used as a light source to attain higher brightness. On the other hand, a too long distance between the LEDs and the surface light-emitting portion in order to reduce unevenness in brightness or coloring increases a thickness of the whole apparatus, thus is not preferable, running against a tendency toward recent slimness.

SUMMARY

In view of the foregoing problems of conventional arts, it is an object of the present invention to provide a hollow planar illuminating apparatus that is of a side light system and is capable of attaining higher brightness and high uniformity ratio of illuminance of illuminating light without any upsizing of the apparatus.

The "side light system" used in the present application refers to an illumination system for emitting light in a direction parallel to a light-emitting surface from a light source lateral to a rear portion of the light-emitting surface, refracting, reflecting and diffusing the light to guide the light to the light-emitting surface.

According to an aspect of the present invention, there is provided a hollow planar illuminating apparatus including: a light reflection surface member disposed on a bottom side of a hollow unit case; a light-emitting surface member disposed facing the light reflection surface member; a wiring board disposed adjacent to a hollow light guide region as a space sandwiched between the light-emitting surface member and the light reflection surface member; an LED light source composed of a plurality of LEDs aligned on the wiring board, each of which emits light having a single color of red, green or blue; an LED collimator disposed in approximately parallel with the LEDs aligned and collecting the light from the LED light source so as to be parallel with a surface of the light-emitting surface member of the unit case; a color sensor disposed on the light reflection surface member in the vicinity of the LED collimator and individually measuring an illuminance of each of red light, green light and blue light among the light incident into the hollow light guide region from the LED light source; and an LED brightness control circuit for controlling light emission intensity of each of the red, green and blue LEDs of the LED light source, based on each illuminance of red, green and blue colored light measured by the color sensor.

According to another aspect of the present invention, there is provided a hollow planar illuminating apparatus including: a light reflection surface member disposed on a bottom side of a hollow unit case; a light-emitting surface member disposed facing the light reflection surface member; a wiring board disposed adjacent to a hollow light guide region as a space sandwiched between the light-emitting surface member and the light reflection surface member; an LED light source composed of a plurality of LEDs aligned and emitting white color light; an LED collimator disposed in approximately parallel with the LEDs aligned and collecting the light from the LED light source so as to be parallel with a surface of the light-emitting surface member of the unit case; an illumination sensor disposed on the light reflection surface member in the vicinity of the LED collimator and measuring an illuminance of white-colored light incident into a hollow light guide region from the LED light source; and an LED brightness control circuit for controlling light emission intensity of each LED of the LED light source, based on illuminance measured by the illuminance sensor.

According to the hollow planar illuminating apparatus according to the first aspect of the present invention, an illuminance of each of three-color LEDs of the color LED light source is measured and a brightness of each color of LEDs is individually controlled, thus controlling a light-emitting brightness of each color of the LEDs when having a difference in light-emitting brightness, so that each color of LEDs has a constant illuminance. Accordingly, the present invention provides a side light system that can emit illuminating light having high brightness and uniformity ratio of illuminance and can be used as a backlight unit for a large-sized liquid crystal display device.

According to another aspect of the present invention, an illuminance of the light from a light source of white LEDs is measured with the illuminance sensor and a brightness of the LED light source is controlled based on the measured illuminance. Accordingly, the present invention provides a hollow planar illuminating apparatus of a side light system that can emit the illuminating light having high brightness and uniformity ratio of illuminance and can be used as a backlight unit for a large-sized liquid crystal display device.

BRIEF DESCRIPTION OF THE DRAWINGS

FIG. 1 is an exploded perspective view of a backlight unit according to a first embodiment of the present invention;

FIG. 2 is a sectional view of the backlight unit illustrated in FIG. 1;

FIG. 3 is a partially broken perspective view of a LED collimator illustrated in FIG. 1;

FIG. 4 is a sectional view illustrating concentration characteristics of the LED collimator illustrated in FIG. 1;

FIG. 5A is a plan view of the backlight unit for describing brightness distribution characteristics of the backlight unit illustrated in FIG. 1;

FIG. 5B is a graph illustrating brightness distribution characteristics of the backlight unit illustrated in FIG. 1;

FIG. 6 is a block diagram of a brightness control circuit in the backlight unit illustrated in FIG. 1;

FIG. 7 is a block diagram of a brightness control circuit in a backlight unit according to a second embodiment of the present invention;

FIG. 8 is an exploded perspective view of a backlight unit according to a third embodiment of the present invention;

FIG. 9 is a sectional view of the backlight unit illustrated in FIG. 8;

FIG. 10 is a graph illustrating a relationship of temperatures of a temperature sensor 12 and outputs of a color sensor 11A or 11B;

FIG. 11 is a block diagram of a brightness control circuit in the backlight unit according to the third embodiment of the present invention;

FIG. 12A is a graph illustrating a brightness change relative to the operation time of a backlight device before temperature correction;

FIG. 12B is a graph illustrating a chromaticity change relative to the operation time of a backlight device before temperature correction;

FIG. 13A is a graph illustrating a brightness change relative to the operation time of a lighting time of a backlight device after temperature correction; and

FIG. 13B is a graph illustrating a chromaticity change relative to the operation time of a backlight device after temperature correction.

DETAILED DESCRIPTION

Now, embodiments of the present invention will be described in detail with reference to the accompanying drawings.

[First Embodiment]

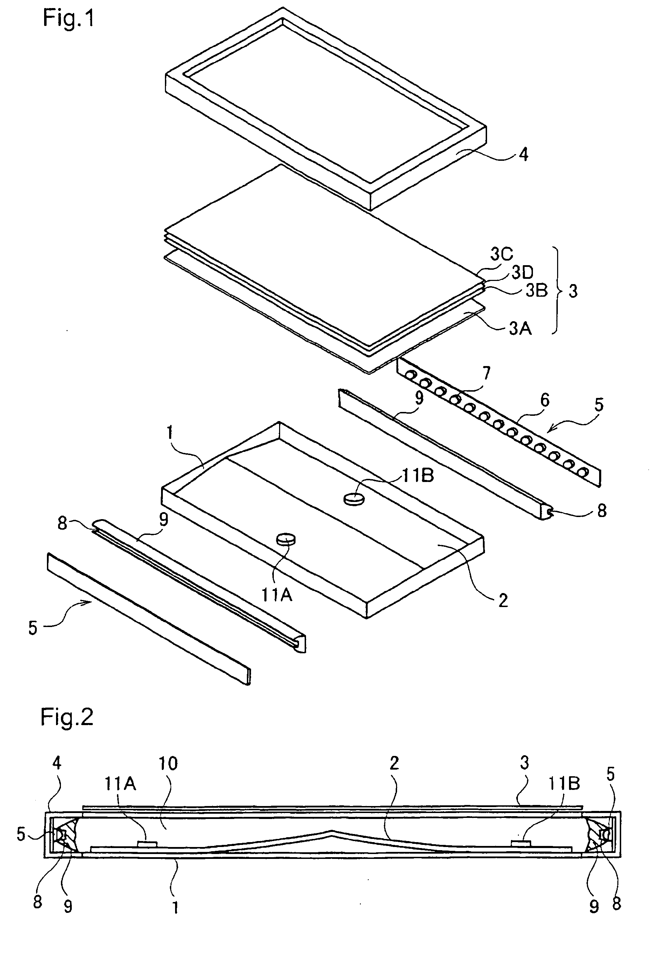

FIGS. 1 and 2 illustrate a backlight unit for a liquid crystal display device that is a hollow planar illuminating apparatus according to a first embodiment of the present invention. The backlight unit is provided with a rectangular unit case 1 which is made of metal having high thermal conductivity, such as aluminum alloy, and which has an open top face. On a bottom face of the unit case 1, a mountain-like shaped light reflection surface member 2 is disposed. The light reflection surface member 2 has a ridge line parallel to a pair of opposing sides of the unit case 1 in the center of the rectangular unit case 1 and is composed of two slopes gradually lowering as it goes from the ridge line toward each of the sides. The opening of the top face of the unit case 1 is covered by a light-emitting surface member 3. In addition, by covering the unit case 1 with a front frame 4 from the side of the light-emitting surface member 3 and by integration with the unit case 1, the backlight unit is assembled. A space portion between the light reflection surface member 2 and the light-emitting surface member 3 in the unit case 1 forms a hollow light guide region 10.

The light reflection surface member 2 is formed by laminating a layer made of a material having high reflectivity and diffusion reflectivity, such as a white PET film or a white ink layer, on a metal or resin plate material. As a material having light diffusion reflectivity, in addition to the above materials, high-reflection aluminum having mirror surface reflectivity or the like may be coated with light transmission diffusion material.

The light-emitting surface member 3 is constructed by laminating two diffusion sheets 3B, 3C and an optical sheet such as a lens sheet 3D disposed between the diffusion sheets on a light transmission diffusion plate 3A. The light-emitting surface member 3 uniformly diffuses the light reflected by the light reflection member 2 and incident on a bottom surface thereof within the hollow light guide region 10 and emits the light through a light-emitting surface of a top face thereof. The light-emitting surface member 3 has a function of diminishing unevenness in brightness on the light-emitting surface to increase a uniformity ratio of illuminance. A distance from the light reflection member 2 to the light-emitting surface member 3 is the smallest above the ridge line in the center of the light-emitting surface member 3 and gradually increases as it goes downward from the ridge line toward each of the sides thereof. Accordingly, the light is made incident into the hollow light guide region 10 from an LED light source disposed at each of both side portions of the light-emitting surface member 3, which will be described later, is reflected by the light reflection member 2 and is made incident on the light-emitting surface member 3, thus achieving a uniform light brightness distribution.

At sloped lower portions on both sides of the light reflection surface member 2, there are disposed color sensors 11A, 11B for detecting the illuminance of each of red (R), green (G) and blue (B) light emitted from the LED light sources 5, which will be described later.

An LED light source 5 is disposed on each of both side faces forming a pair of opposing sides of the unit case 1.

Each of the LED light sources 5 is constructed by mounting, in one row or a plurality of rows, a plurality of LEDs 7 on a slender wiring board 6 having a width that can be accommodated within both side wall surfaces of the unit case 1. The wiring board 6 is made of metal having high thermal conductivity, such as aluminum or aluminum alloy, or ceramic such as aluminum nitride and is fixed onto a side wall of the highly thermally conductive unit case 1 by screwing, bonding or other means. Preferably, highly thermally conductive double-faced tape, sheet or grease is applied between the wiring board 6 and the side wall of the unit case 1. LEDs 7 are mounted onto the LED light source 5 in a manner that a plurality of sets of LED elements, each set including three colors of red (R), green (G) and blue (B), are repeatedly arranged. The plurality of sets of LED elements of three colors may be arranged, each set including a quantity ratio of the three colors for combination into a desired white chromaticity.

At each of the pair of LED light sources 5, a slender LED collimator 9 is disposed in parallel with the LED light source 5. The LED collimator 9 has a recessed groove 8 thereon facing the arrangement of the LEDs 7. The LED collimator 9 is a lens that collects the light emitted from the LEDs 7 of the LED light source 5 in a thickness direction of the unit case 1 and makes the light incident into the hollow light guide region 10. The LED collimator 9 is made of transparent resin such as acryl or polycarbonate, or of a member such as glass.

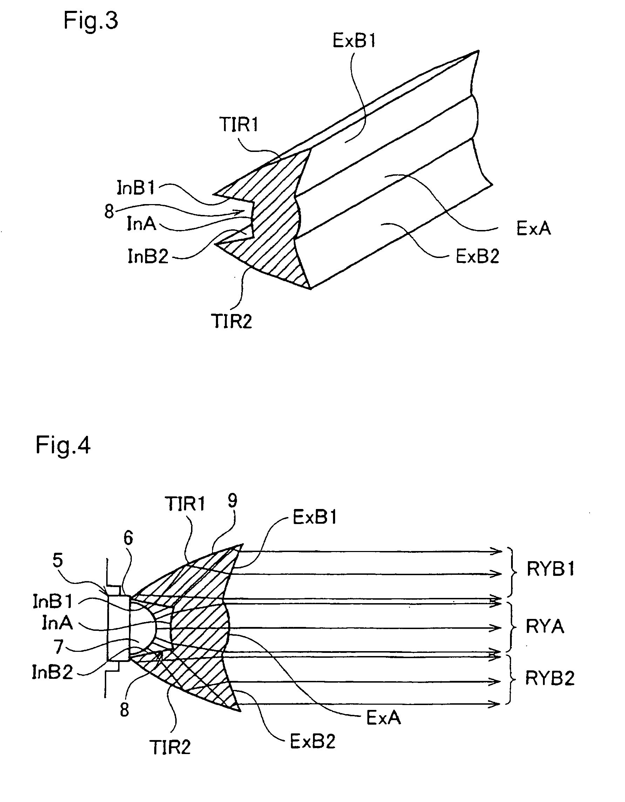

As illustrated in FIGS. 3 and 4, the recessed groove 8 of the LED collimator 9 is constructed from a convex incident surface InA and planar incident surfaces InB1, InB2. The convex incident surface InA guides the light emitted at an angle approximate to an optical axis of the LED 7 into the LED collimator 9. The planar incident surfaces InB1, InB2 are disposed at the top and bottom of the incident surface InA and guides the light emitted at an angle tilted from the optical axis of the LED 7 into the collimator 9. Outer surfaces located on a lower side and an upper side of the LED collimator 9 form the total reflection surfaces TIR1, TIR2 for totally reflecting the light guided into the LED collimator 9. An emission portion of the LED collimator 9 is constructed from a convex emission surface ExA provided on an opposite side to the recessed groove 8 and recessed curved emission surfaces ExB1, ExB2 provided therearound. The convex emission surface ExA collects the incident light on the incident surface InA in approximately parallel to the optical axis of the LED 7. The recessed curved emission surfaces ExB1, ExB2 collect the light totally reflected by the total reflection surfaces TIR1, TIR2, after incidence on the planar incident surfaces InB1, InB2, in approximately parallel to the optical axis of the LED 7 in the same way.

Lights RYA, RYB1, RYB2 which enter the LED collimator 9 from a row of LEDs 7 and emit from the LED collimator 9 are guided into the hollow light guide region 10 illustrated in FIG. 2. The lights RYA, RYB1, RYB2 are reflected in a direction toward the light-emitting surface member 3 by the reflecting surface of the reflecting surface member 2 and are emitted from the light-emitting surface of the light-emitting surface member 3 with high and uniform brightness. Since the presence of the LED collimator 9 allows the light emitted at a wide angle from the LEDs 7 to be collected with high utilization efficiency of at least 80% and at a narrow angle, reflection loss in the hollow light guide region 10 is minimized and brightness is more enhanced than a conventional hollow backlight unit having no LED collimator. Further, due to high light-collecting capability of the light source, high uniformity ratio of brightness and prevention of generation of a local emission line can be achieved by using a diffusion reflecting surface as the reflecting surface instead of a mirror surface.

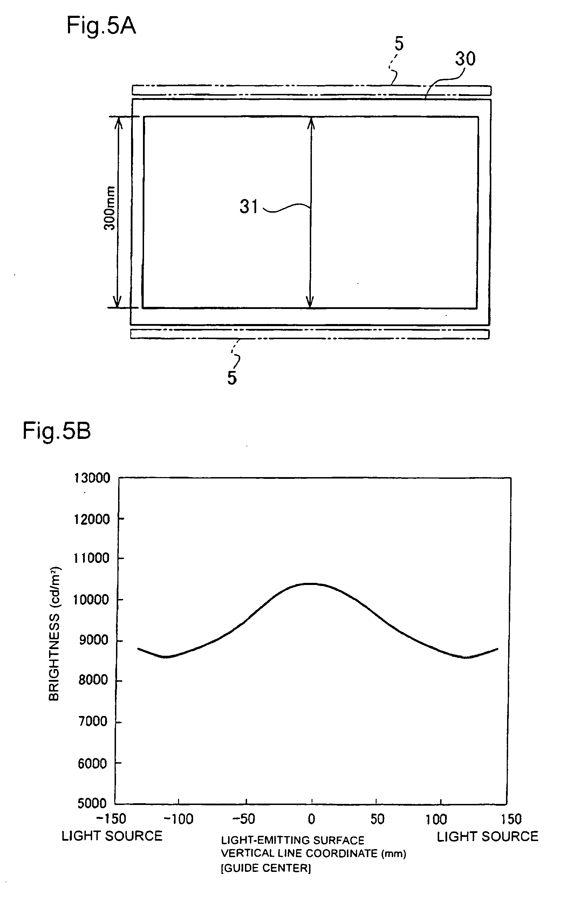

FIGS. 5A and 5B illustrate a brightness distribution in a light-emitting surface of a backlight unit of the present embodiment. FIG. 5A is a plan view of the backlight unit 30 and FIG. 5B is a graph illustrating a brightness distribution in a direction along a brightness distribution measurement line 31 in FIG. 5A. As illustrated in FIG. 5A, the LED light source 5 is located on each of long sides of the top and bottom of the backlight unit 30. The brightness distribution measurement line 31 is a straight line mutually connecting the pair of LEDs 7 (not illustrated) arranged at corresponding positions included in the pair of LED light sources 5. FIG. 5A shows a pair of LEDs 7 (not illustrated) positioned in the center, as representatives of the LEDs 7 included in the pair of LED light sources 5. Accordingly, the brightness distribution measurement line 31 is a straight line indicating a direction at right angles to the arrangement direction of the LEDs 7 included in the LED light source 5 or a direction parallel to the optical axis of the LEDs 7. As illustrated in FIG. 5B, a brightness distribution along the brightness distribution measurement line 31 in a light-emitting surface has a tendency of high brightness in the center of the light-emitting surface in a vertical direction and low brightness at upper and lower portions, but totally has a moderate change and hence a bilaterally symmetrical brightness distribution can be achieved.

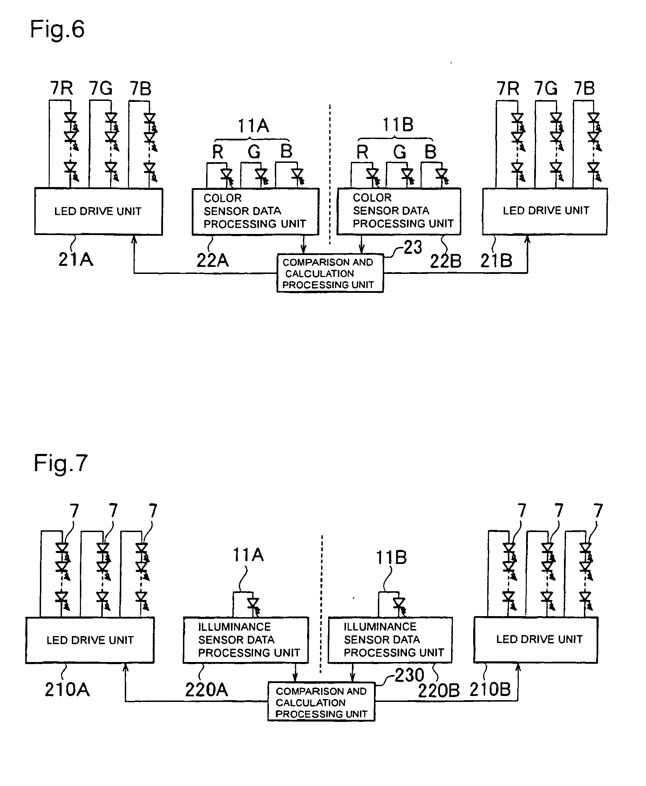

Referring next to FIG. 6, description will be made on a brightness control circuit of the LED light source 5 in the backlight unit of the present embodiment. The brightness control circuit includes LED drive units 21A, 21B, color sensor data processing units 22A, 22B and a comparison and calculation unit 23. The LED drive units 21A, 21B operates to drive a plurality of LEDs 7 included in the LED light sources 5, 5 mounted at both side faces of the backlight unit, handling the elements emitting the same colored light (R, G or B) as a group LED7R, LED7G or LED7B. The color sensor data processing units 22A, 22B perform data-processing on light detection signals from color sensors 11A, 11B mounted at lower portions of on both sides of the mountain-like reflecting surface member 2. The comparison and calculation unit 23 performs predetermined comparison and calculation on illuminance data of each color of RGB from the color sensor data processing units 22A, 22B and commands the LED drive units 21A, 21B to increase or decrease power to be supplied to the LED7R, LED7B, LED7G of each color of RGB.

The comparison and calculation unit 23 determines a ratio of LR:LG:LB, LR, LG, LB representing illuminance of each colored light, based on illuminance data of each color from the color sensor data processing units 22A, 22B, compares the ratio with reference values and determines a brightness ratio adjustment value among respective colored lights. The comparison and calculation unit 23 also compares combined illuminance R+G+B (side A: R+G+B, side B: R+G+B) of all colored lights, using illuminance data of respective colors from the color sensor data processing parts 22A, 22B and determines an increase/decrease ratio of power to be supplied to each group of LED7R, LED7G, LED7B required for uniformity ratio of illuminance. Hence, the power to be supplied to each group of single-color lights LED7R, LED7G, LED7B in the LED light sources 5, 5 is calculated and output to the LED drive units 21A, 21B. Brightness adjustment for each of LED7R, LED7G, LED7B groups in the LED drive units 21A, 21B is performed by LED current adjustment or pulse duration adjustment.

As described above, the light from the LED light sources 5, 5 installed on both sides of the backlight unit facing each other enters the hollow light guide region 10 via the LED collimator 9, is reflected by the mountain-like shaped reflecting surface member 2, reaches the light-emitting surface member 3 from a rear face side thereof, is diffused and collected by the light-emitting surface member 3 and emits as a planar light source having high uniformity ratio of illuminance. The reflecting surface member 2 has a mountain-like shape and therefore, at a one-half portion nearer to one LED light source 5 than the ridge line in the center, the light from the LED light source 5 on that side becomes dominant. Accordingly, when there is a difference in total brightness between the LED light sources 5, 5 on both sides, the light emitted from the light-emitting surface has also a contrast difference occurring on both sides of the ridge line in the center. Therefore, in the case of the present embodiment, an illuminance of the light from each of the LED light sources on both sides is individually measured by the color sensors 11A, 11B. The comparison and calculation part 23 performs predetermined comparison and calculation based on the measurement and adjusts the power to be supplied to LED7R, LED7G, LED7B by the LED drive units 21A, 21B. Thus, the uniformity ratio of brightness at the whole light-emitting surface can be enhanced. In addition, an illuminance of each of single-colored light RGB is detected at the color sensors 11A, 11B, and each brightness ratio of single colored light LED is adjusted such that an illuminance ratio required to synthesize white-colored light is obtained thereby providing a backlight unit capable of irradiating appropriate white-colored light for a color liquid crystal.

In the foregoing embodiment, the color sensors 11A, 11B are installed on both lower portions of the light reflection surface member 2. However, mounting positions of the color sensors 11A, 11B are not particularly limited thereto. In other words, the color sensors may be mounted anywhere, provided that the illuminance of the light from each of the LED light sources 5, 5 can be individually measured in the hollow light guide region 10 partitioned by the mountain-like ridge line portion of the light reflection surface member 2. For example, the color sensors may be mounted at other positions of the light reflection surface member 2, on an inner wall surface of the unit case 1 or at a portion facing the hollow light guide region 10 in an edge portion of a front frame.

In the foregoing embodiment, the light reflection surface member 2 is formed into a mountain-like shape having a ridge line in the center thereof and the LED light sources 5, 5 are mounted at side portions adjacent to both lower portions of the light reflection surface member 2 in the unit case 1. The color sensors 11A, 11B are mounted on both lower portions of the light reflection surface member 2. However, the present invention is not limited thereto. Using a reflecting surface member of a single slope, one LED light source may be mounted at a side face portion adjacent to a lower portion of the light reflection surface member in the unit case and one color sensor may be mounted at a lower portion or any other appropriate position of the light reflection surface member. In this case, the present embodiment uses a control circuit configuration which allows one color sensor to measure a light illuminance ratio of each colored light of RGB and a total illuminance of each colored light, compares the measurements with reference and controls a degree of whiteness and brightness.


[Second Embodiment]

Referring to FIG. 7, a backlight unit according to a second embodiment of the present invention will be described below. A structure of the backlight unit of the present embodiment is common to that of the first embodiment illustrated in FIGS. 1 and 2. Differences of the present embodiment from the first embodiment are as follows. Firstly, an illuminance sensor for measuring light illuminance is used in place of sensors 11A, 11B mounted at both lower portions of a light reflection surface member 2. Secondly, as an LED 7 included in an LED light source 5, for example, there is used a white LED which is packaged with a blue LED and a phosphor to be excited by the light emission of the blue LED and emitting light. Thirdly, as illustrated in FIG. 7, there is provided a brightness control circuit which adjusts light-emitting brightness of the light sources 5, 5 on both sides according to the intensity of illuminance to be detected by the illuminance sensors 11A, 11B.

The brightness control circuit in the backlight unit according to the present embodiment includes LED drive units 210A, 210B, illuminance sensor data processing units 220A, 220B and a comparison and calculation unit 230. The LED drive units 210A, 210B drive each white LED 7 in a pair of LED light sources 5, 5. The illuminance sensor data processing units 220A, 220B perform data processing on a light detection signal from illuminance sensors 110A, 110B mounted at both lower portions of the mountain-like shaped reflecting surface member 2. A comparison and calculation unit 230 performs predetermined comparison and calculation for illuminance data from illuminance sensor data processing units 220A, 220B and commands the LED drive units 210A, 210B to increase or decrease power to be supplied to the LED 7.

The comparison and calculation unit 230 compares illuminances on both sides with each other, using illuminance data from the illuminance sensor data processing parts 220A, 220B, determines an increase/decrease ratio of power to be supplied to an LED 7 required for uniformity ratio of illuminance and outputs the rate to the LED drive units 210A, 210B. Brightness adjustment for the LEDs 7 in the LED drive units 210A, 210B is performed by adjusting an LED current or a pulse duration.

In the present embodiment as well, a light illuminance from each of the pair of LED light sources 5, 5 is individually measured by the pair of illuminance sensors 11A, 11B. The comparison and calculation part 230 performs predetermined comparison and calculation based on the measurements. Further, the LED drive units 210A, 210B adjust power to be supplied to the LEDs 7. Hence, a uniformity ratio of brightness can be increased at the whole light-emitting surface.

In the foregoing embodiment, the illuminance sensors 11A, 11B were mounted at both lower portions of the light reflection surface member 2. However, mounting positions of the color sensors 11A, 11B are not particularly limited thereto. In other words, the color sensors may be mounted anywhere, provided that the illuminance of the light from each of the LED light sources 5, 5 can be individually measured in the hollow light guide region 10 partitioned by the mountain-like ridge line portion of the light reflection surface member 2. For example, the color sensors may be mounted at other positions of the light reflection surface member 2, on an inner wall surface of the unit case 1 or at a portion facing the hollow light guide region 10 in an edge portion of a front frame.

Further, in the foregoing embodiment, the light reflection surface member 2 is formed into a mountain-like shape having a ridge line in the center thereof, and each of the pair of LED light sources 5, 5 is mounted on both sides of the light reflection surface member 2 in the unit case 1. Each of the illuminance sensors 11A, 11B was mounted at the lower portions on both sides of the light reflection surface member 2. However, the present invention is not limited thereto and may be configured such that, using a reflecting surface member of a single slope, an LED light source 5 is mounted at a unit case side portion and an illuminance sensor is mounted on a lower portion of the light reflection surface member or other appropriate positions. In this case, the present embodiment uses a control circuit configuration which allows an illuminance sensor to measure an illuminance, compares the measured illuminance with an additional reference and controls brightness.

Further, in the backlight units of the foregoing first and second embodiments, there turned out to be a shift in wavelength of an emitted light from an LED 7 due to heat generated by many LEDs 7 included in the light source.

[Third Embodiment]

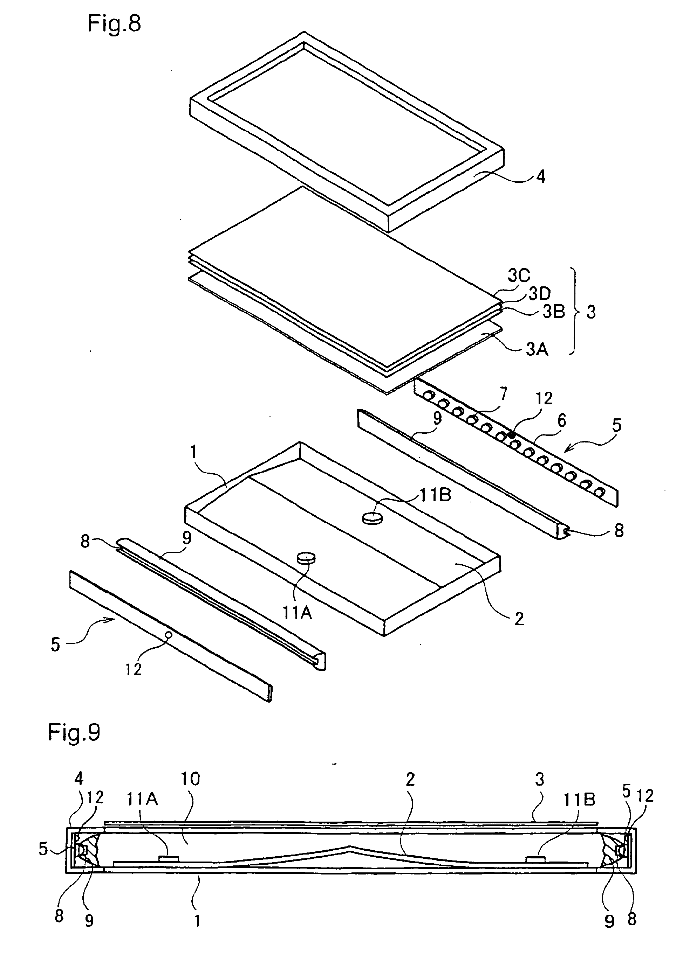

Referring to FIGS. 8 through 11, a backlight unit according to a third embodiment of the present invention will be described below. FIG. 8 is an exploded perspective view of a backlight unit according to the present embodiment and FIG. 9 is a sectional view thereof. The present embodiment is basically common to the first embodiment illustrated in FIGS. 1 and 2. Therefore, the same parts are assigned the same reference numerals and detailed description thereof will not be repeated. A difference of the present embodiment from the first embodiment is that temperature sensors 12A, 12B such as a thermistor are mounted in a unit case 1.

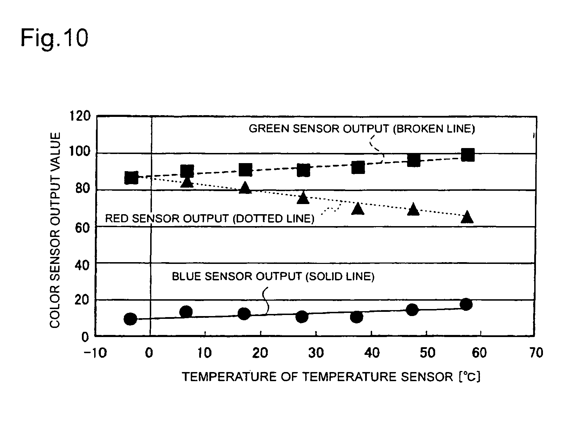

FIG. 10 is a graph illustrating a relationship of temperatures measured by temperature sensors 12A, 12B with outputs (illuminance) of respective colors (RGB) by a color sensor 11A or 11B in the backlight of the present embodiment. FIG. 10 illustrates characteristics of outputs of a color sensor 11A or 11B in a case where an ambient temperature is changed within a range of -5°C to +60°C under a condition where brightness and chromaticity are constant. Respective values at positions plotted with (●), (▲), (■) are outputs of a sensor relative to blue, red or green colored light, respectively, and when the plotted positions are respectively connected, each of approximate curves indicated by a solid line, a dotted line and a broken line can be obtained.

FIG. 10 shows that outputs of a color sensor relative to each colored light is not constantly fixed and changes linearly. This is because the LED light source 5 includes an LED element emitting each colored light of RGB and hence the intensity of light from the LED light source 5 has wavelength characteristics showing a peak in each wavelength of RGB. When an ambient temperature changes due to heat generated by the LED light source 5 itself, an emitted wavelength from the LED 7 of each colored light shifts, so that the intensity of each colored light increases or decreases.

As described above, the detection sensitivity of a color sensor 11A or 11B has such temperature dependency as illustrated in FIG. 10. Accordingly, when a light emission wavelength is shifted by a temperature change, a difference occurs in a detected value of the color sensor 11A or 11B. Accordingly, the brightness and chromaticity output from a backlight device whose drive power is controlled based on detected values of such a color sensor 11A or 11B changes with a temperature, which makes difficult to obtain desired brightness and chromaticity.

Accordingly, as illustrated in FIG. 8, the present embodiment further has temperature sensors 12A, 12B for detecting temperatures in addition to the color sensors 12A, 12B and is configured to control a current to be supplied to LED 7 based on temperatures detected by the temperature sensors 12A, 12B. The temperature sensors 12A, 12B are disposed at such positions that an internal temperature of the unit case 1 is detectable and electrically connected to a control circuit 24 outside the unit case 1, which will be described later.

The temperature sensor 12A may use, for example, a thermistor. The temperature sensors 12A, 12B may be mounted at any position that enables to detect an internal temperature of the backlight device, but it is preferable to mount such temperature sensors on a surface of a wiring board 6 included in the light sources 5, 5. In addition, it is preferable to select a position which is in the vicinity to an LED 7 included in the light sources 5, 5 and has no effect upon emitted light from an LED collimator 9. Accordingly, preferably, the temperature sensors are mounted in a space surrounded by a front frame 4, the light source 5 and the LED collimator 9 in FIG. 8.

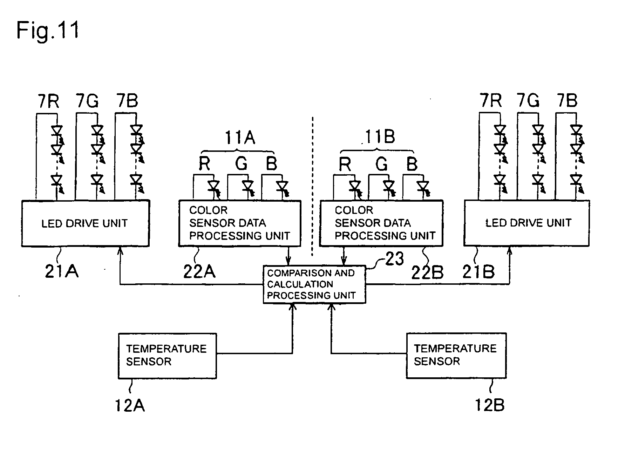

As illustrated in FIG. 11, temperature output signals detected by the temperature sensors 12A, 12B are supplied to a comparative calculation unit 23 together with an output of a color sensor data processing unit 23. The present embodiment has a function for correcting a detected value detected by the color sensor 11A or 11B, based on temperatures detected by the temperature sensor 12A or 12B.

More specifically, first, the comparative calculation unit 23 previously retains, in a memory or the like, respective coefficients of an approximate curve (solid line, dotted line and broken line) obtained from outputs of respective colored light illustrated in FIG. 10 as correction coefficients (A).

Further, the comparative calculation unit 23, when a detected value (Cs) detected by the color sensor 11A or 11B and a temperature (T) detected by the temperature sensor 12A or 12B is supplied, a previously measured reference temperature (To) and a correction coefficient (A) read out from the memory are substituted into an approximate equation of Equation (1) and the detection value (Cs) is corrected.

$$C = A \times (T - To) + Cs \quad \dots\dots\dots\dots\dots\dots\dots\dots\dots \quad (1)$$

where, C is a detected value after correction.

By making the same correction for respective colored light outputs of the color sensor 11A or 11B, desired brightness and chromaticity can be obtained even if a wavelength shift occurs due to a temperature change.

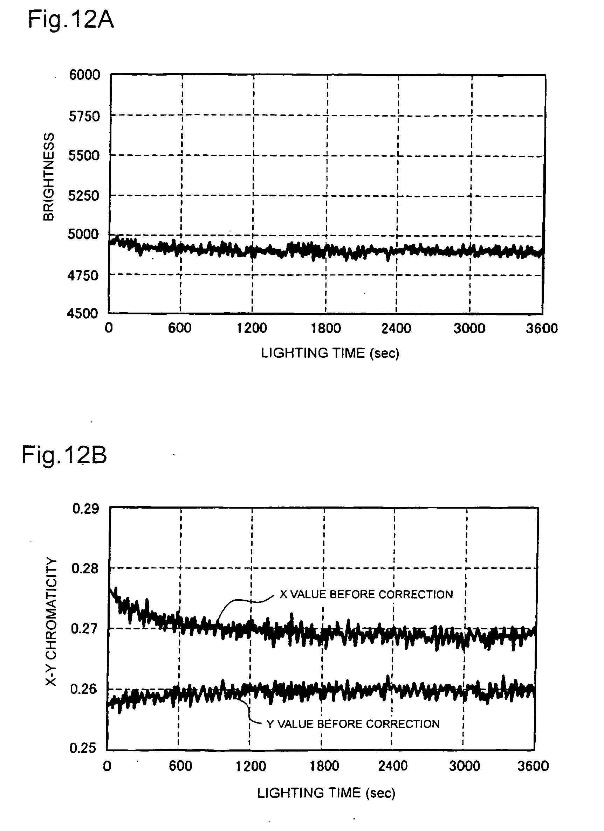

FIG. 12A is a graph illustrating a brightness change relative to an operation time of a backlight device before temperature correction. FIG. 12B is a graph illustrating a chromaticity change of X-Y relative to an operation time of a backlight device before temperature correction. An upper solid line illustrates X values before correction and a lower solid line illustrates a Y value before correction.

According to FIGS. 12A and 12B, it can be verified that brightness and chromaticity change with a lapse of the operation time, that is, a temperature of the backlight device. For example, an X value at the operation time of 0 second under a condition of no temperature change is approximately 0.276, however, after a lapse of 2,400 seconds, the X value lowers to approximately 0.269. This is because the width of a wavelength shift of emitted light caused by a red LED1 is greater than that caused by blue or green LED 1.

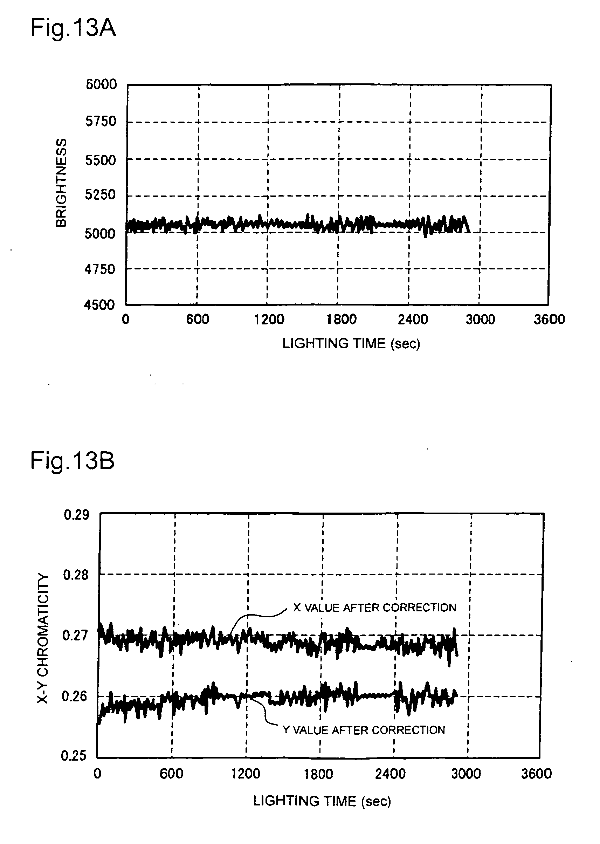

FIG. 13A is a graph illustrating a brightness change relative to an operation time of a backlight device after temperature correction. FIG. 13B is a graph illustrating a chromaticity change of X-Y relative to an operation time of a backlight device after temperature correction. An upper solid line illustrates X values before correction and a lower solid line illustrates a Y value before correction.

According to FIGS. 13A and 13B, it can be verified that changes in brightness and chromaticity are smaller than those before correction even if a temperature change in the backlight device occurs with a lapse of lighting time. For example, an X value at the operation time of 0 second under a condition of no temperature change is approximately 0.27, however, even after a lapse of 2,400 seconds, the X value keeps an approximately same value.

By correcting a detected value detected by the color sensor 11A or 11B based on temperatures detected by the temperature sensors 12A, 12B after comparison of FIGS. 12A and 12B with FIGS. 13A, 13B, changes over time in brightness and chromaticity of the light emitted from the backlight device can be positively suppressed.

The above correction method, hereinafter referred to as a "first correction method", is a method for obtaining an approximate curve from an output result of the color sensor 11A or 11B relative to a temperature change and then correcting a detected value of the color sensor 11A or 11B as a correction coefficient. However, the first correction method may be a method for determining a coefficient for each plotted point and changing a correction coefficient, hereinafter referred to as a "second correction method". For example, changes of the outputs of the color sensor 11A or 11B relative to temperature changes are measured at intervals of 5°C and an approximate equation is calculated, using a correction coefficient for each 5°C. Accordingly, even when the coefficient extremely changes at any temperatures other than 5°C, a detected value detected by the color sensor 11A or 11B can be corrected without being affected thereby. Further, it is appreciated that an interval between plotted points may be decreased/increased and a combination of the first correction method with the second correction method may be made.

Temperature changes obtained by the temperature sensors 12A, 12B for an operation time depend upon changes in a shape or the like of a back device. Accordingly, characteristic values of temperatures of the temperature sensor 12A or 12B relative to outputs of the color sensor 11A or 11B are required to be measured and a correction coefficient is required to be changed, as needed.

The first correction method or the second correction method is applicable to either one of a method for controlling the above peak current value or a method for controlling a duty ratio.

In the present embodiment, the temperature sensors 12A, 12B are further provided to detect temperatures and the comparative calculation unit 23 corrects a detected value detected by the color sensor 11A or 11B, based on temperatures detected by the temperature sensors 12A, 12B. Therefore, even if a wavelength of the emitted light of LED 7 shifts due to a temperature change, changes over time in the brightness and chromaticity of the light emitted from the backlight device apparatus can be surely restrained.

**Claims**

1. A hollow planar illuminating apparatus comprising:

   a hollow unit case;
   a light reflection surface member disposed on a bottom side of the unit case;
   a light-emitting surface member disposed on a top side of the unit case, facing the light reflection surface member;
   an LED light source disposed at end portion of a hollow light guide region sandwiched between the light-emitting surface member and the light reflection surface member and arranged with a plurality of red, green and blue LEDs aligned, each of which emits a single color;
   an LED collimator disposed in approximately parallel with the LEDs aligned and collecting the light from the LED light source so as to be parallel with a surface of the light-emitting surface member of the unit case;
   a color sensor disposed on the light reflection surface member in the vicinity to the LED collimator and individually measuring an illuminance of each of red light, green light and blue light among the light incident into the hollow light guide region from the LED light source; and
   an LED brightness control circuit for controlling light emission intensity of each of the red, green and blue LEDs of the LED light source, based on each illuminance of red, green and blue colored light measured by the color sensor.

2. The hollow planar illuminating apparatus according to claim 1,
   wherein the light reflection surface member has a mountain-like shape, having a ridge line in the center thereof and sloped surfaces on both sides,
   the LED light source is mounted on each of side portions of the unit case adjacent to sloped lower portions on both sides of the light reflection surface member, and
   the color sensor is mounted on each of the sloped lower portions on both sides of the light reflection surface member.

3. The hollow planar illuminating apparatus according to claim 2,
   wherein the brightness control circuit comprises: a drive unit for driving groups of the plurality of LEDs included in the LED light source, the groups consisting of the LEDs emitting the same colored light; a color sensor data processing unit for performing data processing on light detection signals from the color sensors mounted on each of the lower portions on both sides of the reflecting surface member; and a comparison and calculation unit for performing predetermined comparison and calculation for illuminance data of each colored light from the color sensor data processing unit and for commanding the LED drive unit to increase or decrease power to be supplied to the group of LEDs emitting each colored light.

4. The hollow planar illuminating apparatus according to claim 3,
   wherein the comparison and calculation unit determines a ratio of respective colored-light illuminances from illuminance data of respective colored lights from the color sensor data processing unit, compares the ratio with a reference value, determines brightness ratio adjustment value among the colored lights and commands the LED drive unit to increase or decrease power to be supplied to the group of LEDs emitting each colored light, using the brightness ratio adjustment value.

5. The hollow planar illuminating apparatus according to claim 3,
   wherein the comparison and calculation unit calculates an increase/decrease ratio of power to be supplied to the respective groups of LEDs using illuminance data of the respective colored lights from the color sensor data processing unit for obtaining high uniformity ratio of illuminance by comparing combined illuminance of all colored lights.

6. The hollow planar illuminating apparatus according to claim 3,
   wherein a temperature sensor is disposed in the hollow light guide region and the comparison and calculation unit of the brightness control circuit performs the predetermined comparison and calculation by referring to temperature data in the hollow light guide region detected by the temperature sensor.

7. The hollow planar illuminating apparatus according to claim 1,
   wherein the light reflection surface member has a mountain-like shape, having a sloped surface on one side,
   the LED light source is mounted on one-side portion of the unit case adjacent to a sloped lower portion on one side of the light reflection surface member, and
   the color sensor is mounted on the sloped lower portion on one side of the light reflection surface member.

8. The hollow planar illuminating apparatus according to claim 7,
   wherein the brightness control circuit comprises: a drive unit for driving groups of the plurality of LEDs included in the LED light source, the group consisting of the LEDs emitting the same colored light; a color sensor data processing unit for performing data processing on light detection signals from the color sensors mounted on the lower portion on one side of the reflecting surface member; and a comparison and calculation unit for performing predetermined comparison and calculation for illuminance data of each colored light from the color sensor data processing unit and for commanding the LED drive unit to increase or decrease power to be supplied to the group of LEDs emitting each colored light.

9. The hollow planar illuminating apparatus according to claim 8,
   wherein a temperature sensor is disposed in the hollow light guide region and the comparison and calculation unit of the brightness control circuit performs the predetermined comparison and calculation by referring to temperature data in the hollow light guide region detected by the temperature sensor.

10. A hollow planar illuminating apparatus comprising:

    a hollow unit case;

a light reflection surface member disposed on a bottom side of the unit case;

a light-emitting surface member disposed on a top side of the unit case, facing the light reflection surface member;

an LED light source disposed at end portion of a hollow light guide region sandwiched between the light-emitting surface member and the light reflection surface member and arranged with a plurality of LEDs emitting light of a white color arranged in a array;

an LED collimator disposed in approximately parallel with the LEDs in an aligned manner and collecting the light from the LED light source so as to be parallel with a surface of the light-emitting surface member of the unit case;

an illuminance sensor disposed on the light reflection surface member in the vicinity of the LED collimator and measuring an illuminance of white-colored light incident into a hollow light guide region from the LED light source; and

an LED brightness control circuit for controlling light emission intensity of each LED of the LED light source, based on the illuminance measured by the illuminance sensor.

11. The hollow planar illuminating apparatus according to claim 10,
wherein a temperature sensor is disposed in the hollow light guide region and the comparison and calculation unit of the brightness control circuit performs the predetermined comparison and calculation by referring to temperature data in the hollow light guide region detected by the temperature sensor.

Fig.1

Fig.2

Fig.3

Fig.4

## Fig.5A

300mm

5

30

31

5

## Fig.5B

BRIGHTNESS (cd/m²)

13000
12000
11000
10000
9000
8000
7000
6000
5000

-150    -100    -50    0    50    100    150

LIGHT SOURCE

LIGHT-EMITTING SURFACE
VERTICAL LINE COORDINATE (mm)
[GUIDE CENTER]

LIGHT SOURCE

Fig.6

| 7R | 7G | 7B |
|---|---|---|

| | 11A | | | 11B | |
|---|---|---|---|---|---|
| R | G | B | R | G | B |

| LED DRIVE UNIT | COLOR SENSOR DATA PROCESSING UNIT | COLOR SENSOR DATA PROCESSING UNIT | LED DRIVE UNIT |
|---|---|---|---|

21A    22A    23    22B    21B

COMPARISON AND CALCULATION PROCESSING UNIT

| 7R | 7G | 7B |
|---|---|---|

Fig.7

| 7 | 7 | 7 |
|---|---|---|

11A    11B

| LED DRIVE UNIT | ILLUMINANCE SENSOR DATA PROCESSING UNIT | ILLUMINANCE SENSOR DATA PROCESSING UNIT | LED DRIVE UNIT |
|---|---|---|---|

210A    220A    230    220B    210B

COMPARISON AND CALCULATION PROCESSING UNIT

| 7 | 7 | 7 |
|---|---|---|

14

Fig.8

Fig.9

Fig.10

Fig.11

| 7R | 7G | 7B |
| 11A | R G B |
| LED DRIVE UNIT |
| 21A |
| 22A |

COLOR SENSOR DATA PROCESSING UNIT

COMPARISON AND CALCULATION PROCESSING UNIT — 23

COLOR SENSOR DATA PROCESSING UNIT

LED DRIVE UNIT

11B R G B

7R 7G 7B

22B 21B

TEMPERATURE SENSOR

TEMPERATURE SENSOR

12A

12B

Fig.12A

Fig.12B

Fig.13A

Fig.13B

**INTERNATIONAL SEARCH REPORT**

| International application No. |
| --- |
| PCT/JP2008/056068 |

A. CLASSIFICATION OF SUBJECT MATTER
*F21V8/00*(2006.01)i, *F21S2/00*(2006.01)i, *H05B37/02*(2006.01)i, *F21Y101/02*
(2006.01)n

According to International Patent Classification (IPC) or to both national classification and IPC

B. FIELDS SEARCHED

Minimum documentation searched (classification system followed by classification symbols)
F21V8/00, F21S2/00, H05B37/02, F21Y101/02

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2005-071702 A (Advanced Display Inc.), 17 March, 2005 (17.03.05), Full text; all drawings & TW 260446 B & KR 10-2005-0020667 A | 1-11 |
| Y | JP 2004-265978 A (Noritsu Koki Co., Ltd.), 24 September, 2004 (24.09.04), Par. Nos. [0016], [0019]; Figs. 3, 4 (Family: none) | 1-11 |
| Y | JP 2004-214208 A (LABOSPHERE INSTITUTE), 29 July, 2004 (29.07.04), Figs. 8, 14 (Family: none) | 2-9,11 |

[X] Further documents are listed in the continuation of Box C.　　[ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 June, 2008 (03.06.08) | 10 June, 2008 (10.06.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/056068

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-253502 A (Nanao Corp.),<br>21 September, 2006 (21.09.06),<br>Full text; all drawings<br>(Family: none) | 6,9,11 |
| Y | JP 2007-027421 A (Harison Toshiba Lighting Corp.),<br>01 February, 2007 (01.02.07),<br>Par. No. [0023]<br>& KR 10-2007-0009453 A & CN 1937222 A | 6,9,11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8171806 A
- JP 2006106212 A

- JP 2005316337 A